# EUROPEAN PATENT APPLICATION

(11) **EP 3 915 350 A1**
(43) Date of publication of application: **01.12.2021**
(21) Application number: 21175964.2
(22) Date of filing: 26.05.2021
(51) Int. Cl.: A01B 63/32, A01B 73/06, A01B 63/24, A01D 78/10

(54) **A TEDDER APPARATUS**

(30) Priority: 26.05.2020 IE S20200115
(71) Applicant: McHale Engineering, Ballinrobe, County Mayo (IE)
(72) Inventor: McHale, Padraic Christopher, Clonbur, (IE); McHale, Martin William, Kilmaine, (IE); McHale, Paul Gerard, Galway, (IE); Biggins, John Patrick, Claremorris, (IE); Collins, Donal Patrick, Dunmore, (IE); Sheridan, Gerard Patrick, Kilmaine, (IE); Cunniffe, Eamonn Edward Michael, Castlerea, (IE)
(74) Representative: Gorman, Francis Fergus

(57) **Abstract**

A tedder apparatus comprising a chassis (3), supported on a pair of ground engaging wheels (12), is adapted for hitching to a tractor. A central carrier (21) pivotally coupled to the chassis (3) about a main transversely extending pivot axis (18) carries a pair of carrier arms (23). Tedding rotors (20) are spaced apart along the central carrier (21) and the carrier arms (23). The ground engaging wheels (12) are carried on a pair of transversely spaced apart suspension members (14), which are pivotally carried on first pivot shafts (48) supported on side mounting members (45), and extend downwardly therefrom. The suspension members (14) are urgeable rearwardly from a forward transport position with the suspension members (14) extending downwardly forwardly from the first pivot shafts (48) to and through a plurality of selectable rearward working positions for setting the angle of attack (α) of the tedding rotors relative to the ground at a desired angle, which in turn sets the effective working height of tines (38) of the tedding rotors (20) at a desired height above the ground.

## Description

The present invention relates to a tedder apparatus, and in particular, to a tedder apparatus for hitching to a prime mover.

Tedder apparatus for tedding hay, straw and other such fibrous crop materials lying in a field to turn over the lying crop material, in order to accelerate drying of the lying crop material are well known. Such tedder apparatus typically comprise a chassis carried on a pair of spaced apart ground engaging wheels, with the chassis terminating at a forward end in a hitch for hitching the tedder apparatus to a prime mover, typically, a tractor. A carrier comprising a central carrier is coupled to the chassis adjacent the rearward end of the chassis, and typically carries a pair of elongated carrier arms, which extend sidewardly outwardly from the central carrier on respective opposite ends thereof, and transversely of the direction of normal forward travel of the tedder apparatus. A plurality of tedding rotors are spaced apart along and carried on the central carrier and on the carrier arms for tedding the lying crop material. Each tedding rotor typically comprises a rotatable element which is driven in rotation, and which carriers a plurality of tines spaced apart circumferentially around the outer periphery of the rotatable element for engaging and turning the lying crop material. A freely rotatable ground engaging rotor wheel, typically, is carried on a mounting extending downwardly and slightly rearwardly from the rotatable element of each tedding rotor. A drive transmission extending along the central carrier and along the carrier arms provides drive for driving the rotatable elements of the respective tedding rotors.

Typically, the lying crop material lies on top of the residual stubble remaining upstanding in the field after the crop has been harvested. The height of the residual stubble above the ground varies depending on the type of crop which has been harvested, and the harvesting machinery which harvests the crop. Thus, the level at which crop material may lie on top of the stubble in a field above the ground may vary anywhere from 20mm to 100mm. Accordingly, it is important that the level at which the tines of the tedding rotors engage the crop material can be varied to suit different types of crop material and the level at which the lying crop material lies on the residual stubble above the ground.

Additionally, when such tedder apparatus are in the working state, the carrier arms, which carry the rotors, extend transversely from the tedder apparatus adjacent the rearward end of the chassis. Such carrier arms are relatively long, and each such carrier arm may be of length from 4 metres to 10 metres. Accordingly, such tedder apparatus in the working state thereof are unsuitable for towing along a public thoroughfare, such as a roadway, a highway or the like, due to the overall width of the tedder apparatus. In order to address this problem, the central carrier and the carrier arms are pivotal from the working state to a transport state. In the transport state the carrier arms, which in the working state extended transversely of the tedder apparatus, now extend forwardly from the rear of the chassis, and substantially parallel to the chassis. In the transport state the overall width of the tedder apparatus is significantly reduced and the tedder apparatus is suitable for towing on a public thoroughfare.

In the working state, the carrier arms as mentioned above extend transversely from the apparatus adjacent the rearward end thereof, and thus, the majority of the weight of the tedder apparatus in the working state thereof is located towards the rearward end of the chassis. This requires that the ground engaging wheels should be located relatively closely to the rearward end of the tedder apparatus, in order to balance the weight of the tedder apparatus about the ground engaging wheels of the tedder apparatus. Otherwise, the weight of the portion of the tedder apparatus rearward of the rotational axis of the ground engaging wheels would induce a turning moment about the rotational axis of the ground engaging wheels which would tend to lift the rear wheels of the towing vehicle, such as a tractor off the ground, thereby leading to loss of traction of the towing vehicle. However, when the central carrier and the carrier arms have been pivoted into a transport state, the weight distribution of the tedder apparatus about the ground engaging wheels of the tedder apparatus is altered significantly, due to the fact that a large proportion of the weight of the carrier arms has been transferred from the rear of the tedder apparatus towards the front of the tedder apparatus. This, has serious consequences, in that the weight of the tedder apparatus becomes unbalanced about the ground engaging wheels of the tedder apparatus, and an excessive proportion of the weight of the tedder apparatus is borne by the towing vehicle through the hitch thereof. This in certain cases can result in an excessive turning moment being induced about the rotational axis of the rear ground engaging wheels of the towing vehicle. This turning moment acts in a direction, which tends to raise the front of the towing vehicle upwardly with a resultant loss of steering or difficulty in steering the towing vehicle by the forward steerable ground engaging wheels. This is undesirable.

There is therefore a need for a tedder apparatus which addresses this problem.

The present invention is directed towards providing a tedder apparatus which addresses the problem.

According to the invention there is provided a tedder apparatus for hitching to a prime mover, the tedder apparatus comprising an elongated chassis extending from a rearward end to a forward end in the direction of normal forward travel of the apparatus, a carrier pivotally coupled to the chassis adjacent the rearward end thereof about a main pivot axis extending transversely of the chassis, the carrier carrying a plurality of tedding rotors, and being foldable from a working state extending transversely of the chassis with the tedding rotors spaced apart along the carrier, to a transport state with at least one portion of the carrier extending substantially parallel to the chassis, each tedding rotor comprising a corresponding rotatably mounted ground engaging rotor wheel engageable with the ground when the carrier is in the working state, a pair of transversely spaced apart main ground engaging wheels carried on a suspension means for supporting the chassis, the main ground engaging wheels being rotatable about a common rotational wheel axis, wherein the suspension means is configured to constrain the main ground engaging wheels to be urgeable rearwardly relative to the chassis from a forward transport position to a plurality of spaced apart selectable working positions with the downward spacing of the common rotational wheel axis from the chassis progressively or decrementally reducing as the main ground engaging wheels are urged rearwardly through the respective working positions for progressively or decrementally reducing the effective working height of the tedding rotors above the ground.

In one embodiment of the invention the suspension means is coupled to the chassis so that as the main ground engaging wheels are urged rearwardly through the respective working positions, the level of the main pivot axis above the level of the common rotational wheel axis is progressively or decrementally reduced. Preferably, the main ground engaging wheels and the ground engaging rotor wheels are constrained through the main pivot axis so that as the main ground engaging wheels are urged rearwardly through the respective working positions, the angle of attack of the tedding rotors with the ground progressively or incrementally increases.

Preferably, the suspension means is pivotally coupled to the chassis about a first pivot axis extending transversely of the chassis, the suspension means extending downwardly from the first pivot axis and being pivotal through an arc in a rearward direction for constraining the main ground engaging wheels to move through the respective working positions, as the main ground engaging wheels are urged rearwardly from the transport position to the respective working positions.

Preferably, the suspension means is pivotal rearwardly from the transport position thereof corresponding to the transport position of the main ground engaging wheels to and through respective working positions corresponding to the respective working positions of the main ground engaging wheels.

In one embodiment of the invention a limit means is provided for selectively limiting rearward travel of the main ground engaging wheels to the respective selectable working positions.

Preferably, the limit means is urgeable through a plurality of selectable limit positions corresponding to the selectable working positions of the main ground engaging wheels.

Advantageously, the limit means is progressively or incrementally urgeable upwardly through the respective limit positions corresponding to the working positions of the main ground engaging wheels as the main ground engaging wheels are urged rearwardly.

In another embodiment of the invention the limit means is pivotally mounted on the chassis, and preferably, is pivotal through the respective limit position.

In one embodiment of the invention the limit means is pivotally mounted on the chassis about a second pivot axis extending transversely of the chassis, and preferably, the second pivot axis extends parallel to the first pivot axis, and advantageously, the second pivot axis coincides with the first pivot axis.

Preferably, the limit means extends in a generally rearwardly downwardly direction from the second pivot axis.

In another embodiment of the invention a retaining means is provided for selectively retaining the limit means in the respective selectable limit positions.

In another embodiment of the invention the limit means is engageable with the suspensions means for retaining the main ground engaging wheels in the respective selectable working positions.

Preferably, the limit means comprises a first abutment means engageable with a second abutment means of the suspension means for locating the main ground engaging wheels in the respective selectable working positions.

In another embodiment of the invention a pair of transversely spaced apart limit means are provided.

Advantageously, each limit means comprises a limit member, and preferably, each first abutment means is formed on an edge of the corresponding limit member.

In a further embodiment of the invention the suspension means is pivotal rearwardly and downwardly through an arc from the transport position thereof to a bottom dead centre position below the first pivot axis prior to being pivoted rearwardly upwardly to the selectable working positions thereof.

In one embodiment of the invention the suspension means is pivotal forwardly from the bottom dead centre position to the transport position through an angle of at least 5°, and preferably, the suspension means is pivotal forwardly from the bottom dead centre position to the transport position through an angle in the range of 5° to 80°, and preferably, the suspension means is pivotal from the bottom dead centre position to the transport position through an angle in the range of 20° to 60°, and advantageously, the suspension means is pivotal from the bottom dead centre position to the transport position though an angle in the range of 30° to 50°, and ideally, the suspension means is pivotal from the bottom dead centre position to the transport position through an angle of approximately 40°.

In another embodiment of the invention at least one stop member mounted on the chassis is engageable with at least one engagement member carried on the suspension means in the forward transport position thereof.

In another embodiment of the invention the suspension means is pivotal rearwardly from the bottom dead centre position to the first one of the working positions through an angle in the range of 5° to 50°, and preferably, the suspension means is pivotal from the bottom dead centre position to the first one of the working positions through an angle in the range of 10° to 40°, and advantageously, the suspension means is pivotal from the bottom dead centre position to the first one of the working positions through an angle of approximately 30°.

In another embodiment of the invention the suspension means is pivotal rearwardly from the bottom dead centre position to the last one of the selectable working positions through an angle in the range of 20° to 80°, and preferably, the suspension means is pivotal from the bottom dead centre position to the last of the working positions through an angle in the range of 30° to 60°, and advantageously, the suspension means is pivotal from the bottom dead centre position to the last of the working positions through an angle of approximately 50°.

In another embodiment of the invention the angular spacing between adjacent working positions of the suspension means lies in the range of 1° to 10°, and preferably, the angular spacing between adjacent working positions of the suspension means lies in the range of 1° to 5°, and advantageously, the angular spacing between adjacent working positions of the suspension means is approximately 2°.

Preferably, the main ground engaging wheels are rotatably carried on respective carrier shafts, and preferably, the carrier shafts extend from respective opposite ends of a transversely extending carrier axel.

In another embodiment of the invention the carrier axel is carried on the suspension means.

In one embodiment of the invention the suspension means comprises at least one suspension member pivotally coupled to the chassis about the first pivot axis, and preferably, the at least one suspension member extends downwardly form the chassis.

Preferably, a pair of the suspension members are provided transversely spaced apart from each other.

In one embodiment of the invention the second abutments means comprises an abutment shaft extending between and secured to the suspension members, and preferably, the first abutment means comprises an abutment recess formed in each limit means co-operable with the abutment shaft.

In one embodiment of the invention an urging means is provided for urging the main ground engaging wheels from the transport position to the respective selectable working positions. Advantageously, the urging means comprises a linear actuator, and preferably, the urging means comprises a hydraulic ram.

In another embodiment of the invention the carrier comprises a central carrier, and a pair of carrier arms extending from the central carrier on opposite ends thereof.

In one embodiment of the invention the central carrier is pivotal about the main pivot axis from a working state extending rearwardly from the chassis to a transport state extending upwardly from the chassis.

In another embodiment of the invention the carrier arms are pivotally coupled to the central carrier on respective opposite ends thereof about respective third pivot axes, and are pivotal from a working state extending from the central carrier on the respective opposite ends thereof transversely relatively to the chassis when the central carrier is in the working position with the tedding rotors spaced apart along the carrier arms and the central carrier in a transverse direction relative to the chassis, to a transport state extending forwardly from the central carrier when the central carrier is in the transport state.

In one embodiment of the invention the respective third pivot axes extend in a generally forwardly direction when the central carrier is in the working state.

In another embodiment of the invention the carrier arms are supported in the working state by respective connecting means connecting the corresponding carrier arms to the central carrier.

In one embodiment of the invention each connecting means is coupled to one of the central carrier and the corresponding one of the carrier arms to permit limited pivotal movement of the corresponding carrier arm about the corresponding third pivot axis relative to the central carrier for accommodating rising and falling motion of the rotor ground engaging wheels to accommodate an uneven ground contour.

In one embodiment of the invention the limited pivotal movement of the carrier arms about the respective third pivot axes comprises upward and downward pivotal movement above and below a horizontal state of the carrier arms in the working state, and preferably, the permitted limited pivotal movement upwardly and downwardly above and below the horizontal state of the carrier arms lies in the range of 1° to 3° about the respective third pivot axes above the horizontal state of the carrier arms, and lies in the range of 1° to 3° about the third pivot axes below the horizontal state of the carrier arms, and advantageously, approximately 2° above and 2° below the horizontal state of the carrier arms.

Preferably, a proximal end of each connecting means is coupled to the central carrier for accommodating the limited pivotal movement of the corresponding carrier arm about the corresponding third pivot axis.

In another embodiment of the invention each connecting means terminates adjacent the proximal end thereof in one of a guide pin and a guide slotted member, and the other one of the guide pin and the guide slotted member is mounted on the central carrier, so that the guide pin is slideable in a guide slot of the corresponding guide slotted member for limiting the extent of the limited pivotal movement of the corresponding carrier arm about the third pivot axis.

In another embodiment of the invention each connecting means adjacent the proximal end thereof terminates in a corresponding one of the guide pin, and the corresponding guide slotted member is mounted on the central carrier. Preferably, the guide slotted members are mounted on the central carrier spaced apart transversely relative to the direction of the normal forward travel of the tedder apparatus.

In another embodiment of the invention the connecting means are connected by a variable length coupling means adjacent the central carrier to permit movement of the connecting means relative to each other in order to accommodate the limited pivotal movement of the carrier arms about the third pivot axes.

In one embodiment of the invention the variable length coupling means is coupled to the respective connecting means adjacent the proximal ends thereof.

Advantageously, the variable length coupling means is moveably mounted on the central carrier and is moveable transversely relative to the direction of normal forward travel of the tedder apparatus.

In one embodiment of the invention the variable length coupling means is selectively operable in a first state for urging the proximal ends of the connecting means towards each other for raising the carrier arms from the working state through a predefined angle to an intermediate state. Preferably, the predefined angle lies in the range of 5° to 10°, and advantageously, in the range of 6° to 8°, and ideally, the predefined angle is approximately 7°.

Preferably, the variable length coupling means is selectively operable in a second state permitting movement of the connecting means relative to each other. Advantageously, the variable length coupling means comprises a hydraulic ram, and advantageously, the hydraulic ram of the variable length coupling means comprises a single acting ram, which preferably, comprises a spring return hydraulic ram.

In another embodiment of the invention the connecting means comprise respective hydraulic rams, and preferably the hydraulic rams of the connecting means are configured for urging the carrier arms about the respective third pivot axes from the working state to the transport state.

In another embodiment of the invention a pair of protective side bars are provided on respective opposite sides of the chassis, the protective side bars being urgeable from a lower working state to a raised transport state.

Preferably, the protective side bars are urgeable from the working state to the transport state in response to movement of the ground engaging wheels forwardly from any one of the working positions to the transport position.

In another embodiment of the invention the protective side bars are operably connected to the suspension means for urging the protective side bars from the working state to the transport state.

Advantageously, the protective side bars are operably coupled to the suspension means by a linkage mechanism.

In one embodiment of the invention the protective side bars are pivotally mounted towards a forward end thereof, and are pivotal about a fourth pivot axis extending transversely of the chassis between the working state and the transport state.

In another embodiment of the invention the side protective bars are supported by support means at respective locations rearwardly spaced apart from the fourth pivot axis.

Preferably, the support means comprises a pair of transversely spaced apart support members pivotally coupled to the chassis about a transversely extending fifth pivot axis, and pivotal about the fifth pivot axis between a first state with the protective side bars in the working state, and a second state with the protective side bars in the transport state.

In another embodiment of the invention the support members are urgeable from the first state to the second state about the fifth pivot axis in response to the ground engaging wheels being urged from one of the working positions to the transport position. Ideally, the support means is coupled to the suspension means by the linkage.

The advantages of the invention are many. A particularly important advantage of the invention is that while the carrier, including the central carrier and the carrier arms are in both the working state and the transport state, the weight of the tedder apparatus is relatively evenly balanced about the main ground engaging wheels. Thereby, any risk of the tedder apparatus having an adverse effect on either the traction or the steering of the towing vehicle, in general, is avoided, and at the very least is minimised. A further, and a particularly important advantage of the invention, is achieved when the main ground engaging wheels of the tedder apparatus are in the transport position, and the tedder apparatus is in the transport state, in that the wheel base between the rear ground engaging wheels of the towing vehicle and the ground engaging wheels of the tedder apparatus is significantly reduced. This, maximises the manoeuvrability of the tedder apparatus when the tedder apparatus is in the transport state, since due to the relatively short wheel base between the rear ground engaging wheels of the towing vehicle and the ground engaging wheels of the tedder apparatus, the tedder apparatus can be towed directly from a public thoroughfare into a field, even with a particularly narrow access entrance, with minimal manoeuvring being required due to the fact that in the transport state of the tedder apparatus the wheel base is relatively short.

These advantages are achieved by virtue of the fact that the ground engaging wheels are mounted on the suspension means, which is coupled to the chassis, and is urgeable between the working positions, where the ground engaging wheels are located adjacent the rearward end of the chassis with the weight of the tedder apparatus balanced about the ground engaging wheels, and the forward transport position with the weight of the tedder apparatus still balanced about the ground engaging wheels, and furthermore, and of particular importance, with the wheel base of the tedder apparatus between the rearward ground engaging wheels of the towing vehicle and the ground engaging wheels of the tedder apparatus significantly shortened.

A further advantage of the invention is that by urging the ground engaging wheels rearwardly from the forward transport position to the rearward working positions, the level of the tedding rotors above the ground, and in turn the level at which the tines of the tedding rotors engage the crop material lying in the field above the ground is readily easily adjusted. This ease of adjustment of the height at which the tedding rotors engage the lying crop material is achieved by simply urging the ground engaging wheels rearwardly through a plurality of selectable working positions, such that as the ground engaging wheels are urged through the respective selectable working positions, the level at which the leading edges of the tedding rotors engage the lying crop material is progressively reduced. Thus, by merely urging the ground engaging wheels rearwardly through the respective working positions the level at which the leading edges of the tedding rotors engage the lying crop material is readily adjustable. These and other significant advantages of the tedder apparatus according to the invention over known tedder apparatus will be apparent from the following description of a preferred embodiment thereof.

The invention will now be more clearly understood from the following description of a preferred nonlimiting embodiment thereof, which is given solely by way of example only with reference to the accompanying drawings, in which:
Fig. 1 is a perspective view of a tedder apparatus according to the invention,
Fig. 2 is another perspective view of the tedder apparatus of Fig. 1,
Fig. 3 is a side elevational view of the tedder apparatus of Fig. 1 in a different state to that of Fig. 1,

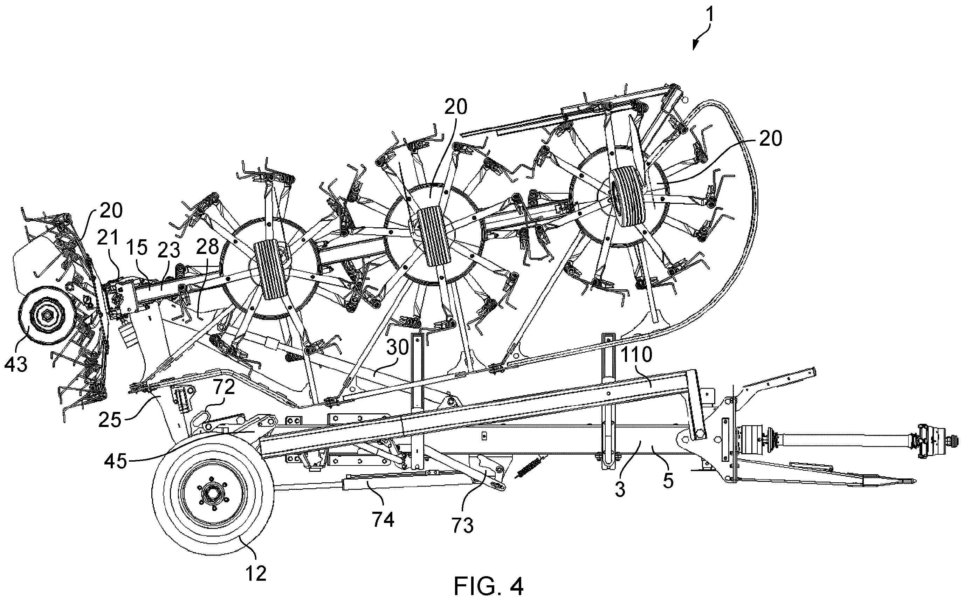

Fig. 4 is a side elevational view of the tedder apparatus of Fig. 1 in a different state to that of Figs. 1 and 3,
Fig. 5 is a cross-sectional side elevational view of a detail of the tedder apparatus of Fig. 1,
Fig. 6 is a side elevational view of the tedder apparatus of Fig. 1,
Fig. 7 is a cross-sectional side elevational view of the detail of Fig. 5 in a different state to that of Fig. 5,
Fig. 8 is a cross-sectional side elevational view of a detail of the tedder apparatus of Fig. 1,
Fig. 9 is a side view similar to that of Fig. 6 of the tedder apparatus of Fig. 1 with a portion of the tedder apparatus in a different state to that of Fig. 6,
Fig. 10 is a cross-sectional side elevational view of a detail of the tedder apparatus of Fig. 1,
Fig. 11 is a cross-sectional side elevational view of a detail of the tedder apparatus of Fig. 1,
Fig. 12 is a cross-sectional side elevational view of a detail of the tedder apparatus of Fig. 1,
Fig. 13 is a cross-sectional side elevational view of a detail of the tedder apparatus of Fig. 1,
Fig. 14 is a rear end elevational view of the tedder apparatus of Fig. 1,
Fig. 15 is an enlarged rear end elevational view of a portion of the tedder apparatus of Fig. 1,
Fig. 16 is a rear end elevational view of a portion of the tedder apparatus of Fig. 1,
Fig. 17 is an enlarged rear end elevational view of a portion of the tedder apparatus of Fig. 1,
Fig. 18 is another rear end elevational view of the tedder apparatus of Fig. 1 in a different state to that of Fig. 14,
Fig. 19 is an enlarged end view of a detail of the tedder apparatus of Fig. 1,
Fig. 20 is an enlarged perspective view of a detail of the tedder apparatus of Fig. 1,
Fig. 21 is a cross-sectional side elevational view of a detail of the tedder apparatus of Fig. 1,
Figs. 22 to 27 are perspective views of details of the tedder apparatus of Fig. 1,
Fig. 28 is a perspective view of the tedder apparatus of Fig. 1 with a portion of the tedder apparatus having been removed,
Fig. 29 is a view similar to Fig. 28 of the portion of the tedder apparatus of Fig. 28 in a different state to that of Fig. 28,
Fig. 30 is a view similar to Fig. 28 of the portion of the tedder apparatus of Fig. 28 in a further different state to that of Figs. 28 and 29,
Fig. 31 is a side elevational view of the portion of Fig. 28 of the tedder apparatus of Fig. 1 illustrated in the state of Fig. 28,
Fig. 32 is a side elevational view of the portion of Fig. 28 of the tedder apparatus of Fig. 1 illustrated in the state of Fig. 29, and
Fig. 33 is a side elevational view of the portion of Fig. 28 of the tedder apparatus of Fig. 1 in the state of Fig. 30.

Referring to the drawings there is illustrated a tedder apparatus according to the invention indicated generally by the reference numeral 1. The tedder apparatus 1 comprises a chassis 3 comprising an elongated central chassis member 5. The central chassis member 5 extends from a forward end 7, terminating in a forwardly extending hitch 8 for hitching the tedder apparatus 1 to a prime mover, typically, a tractor, to a rearward end 9, from which a pair of rearwardly extending rearward chassis members 10 diverge rearwardly. The rearward chassis members 10 terminate in rear ends 11 which define a rear end 9 of the chassis 3. A pair of transversely spaced apart main ground engaging wheels 12 are rotatably carried about a transversely extending common rotational wheel axis 13 on a suspension means, namely on a pair of transversely spaced apart suspension members 14. The suspension members 14 are pivotally mounted on the chassis 3, and extend generally downwardly from the chassis 3, as will be described in more detail below. The tedder apparatus 1 is towed by a tractor or other prime mover in a forward direction, namely, in the direction of the arrow A for spreading and turning hay or straw in a field to accelerate drying thereof.

A carrier means comprising a carrier 15 extending transversely in the direction of normal forward travel of the tedder apparatus 1 is pivotally coupled to the rear end 9 of the chassis 3 by a pair of main pivot shafts 17 which are carried on the rearward chassis members 10 adjacent the rear ends 11 thereof, and which define a transversely extending common main pivot axis 18. The main pivot axis 18 extends transversely of the direction of normal forward travel of the tedder apparatus 1, and parallel to the rotational wheel axis 13 of the main ground engaging wheels 12. The carrier 15 is pivotal relative to the chassis 3 about the main pivot axis 18 as will be described in more detail below. The carrier 15 carries a plurality of tedding rotors 20, in this embodiment of the invention eight tedding rotors 20 which are equi-spaced apart transversely along the carrier 15.

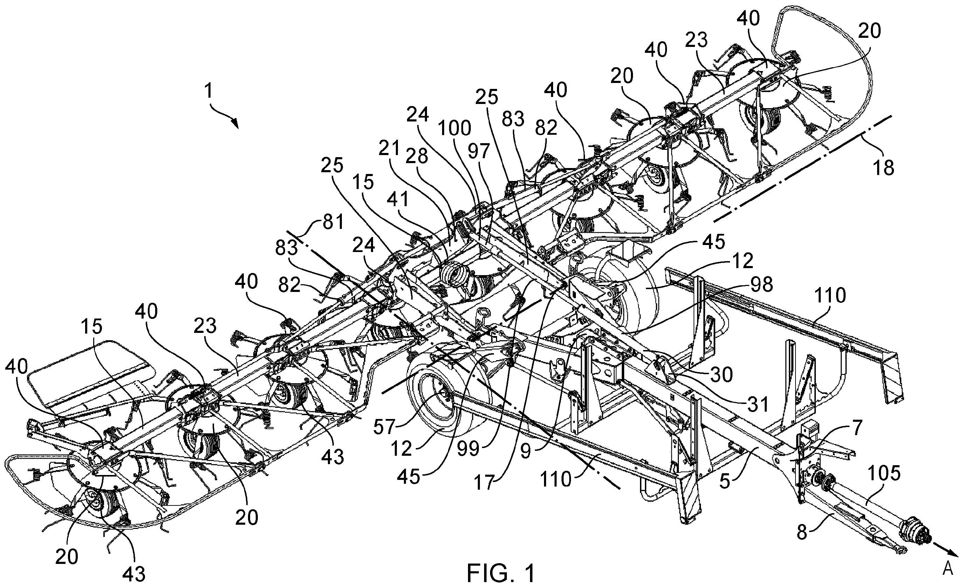

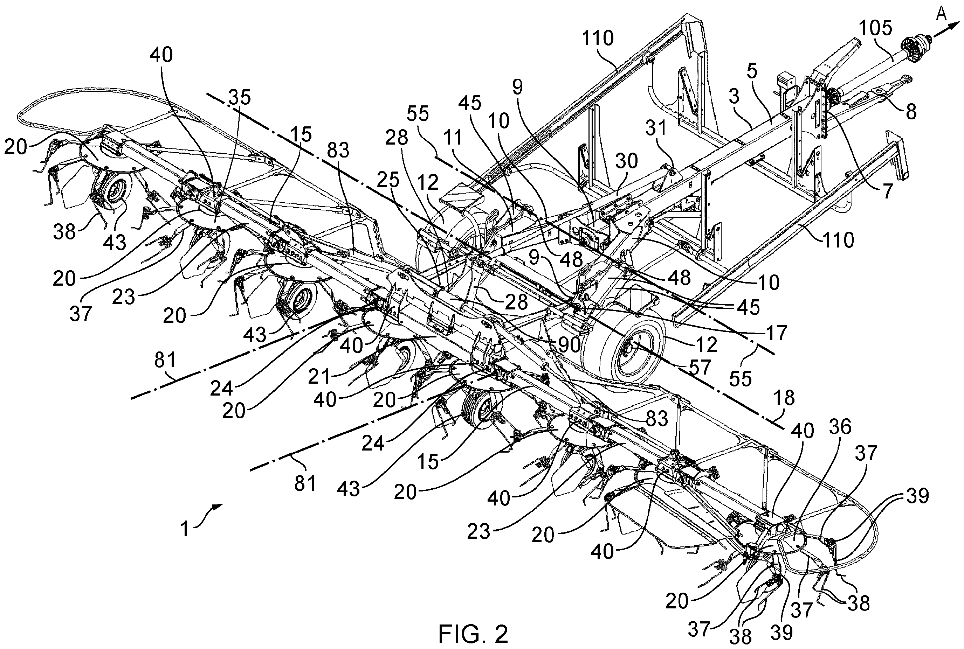

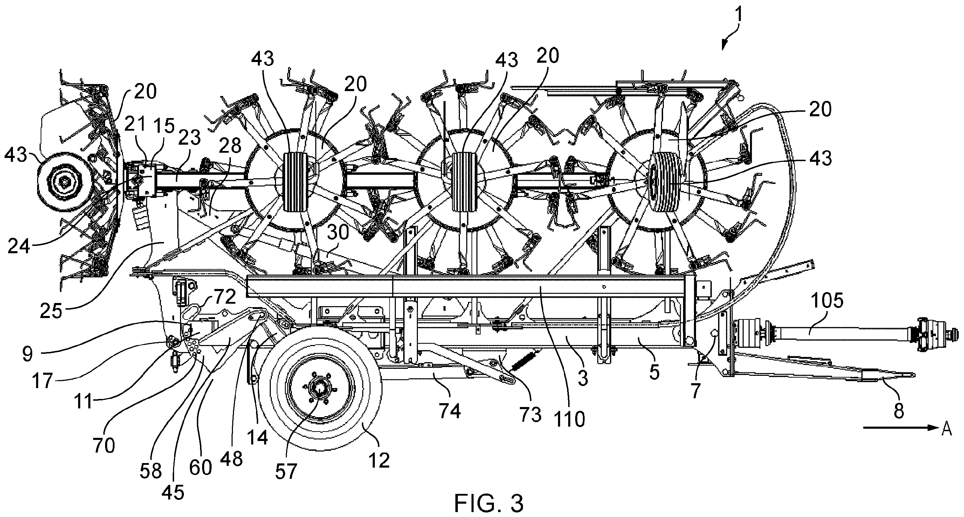

The carrier 15 comprises a central carrier 21 which is pivotally carried on the main chassis 3 about the main pivot shaft 18, and a pair of carrier arms 23 extending from opposite ends 24 of the central carrier 21. The carrier arms 23 are pivotally coupled to the central carrier 21, as will be described below in more detail, and are foldable together with the central carrier 21 from a working state illustrated in Figs. 1 and 2 with the carrier arms 23 extending from the central carrier 21 transversely relative to the chassis 3 and transversely of the direction of normal forward travel of the tedder apparatus 1, for tedding hay, straw and the like in a field, to a transport state illustrated in Fig. 3 with the carrier arms 23 extending forwardly from the central carrier 21 and parallel to the central chassis member 5, so that the tedder apparatus may be towed on a public roadway or thoroughfare. The central carrier 21 is pivotal about the main pivot axis 18 from the working state illustrated in Figs. 1 and 2 extending rearwardly from the chassis 3, to the transport state illustrated in Fig. 3 with the central carrier 21 extending upwardly from the chassis 3, in order to accommodate the carrier arms 23 extending forwardly therefrom and parallel to the central chassis member 5. In this embodiment of the invention the central carrier 21 carries two tedding rotors 20, and each carrier arm 23 carries three tedding rotors 20. When the central carrier 21 and the carrier arms 23 are in the working state, the tedding rotors 20 are equi-spaced apart along the central carrier 21 and the carrier arms 23.

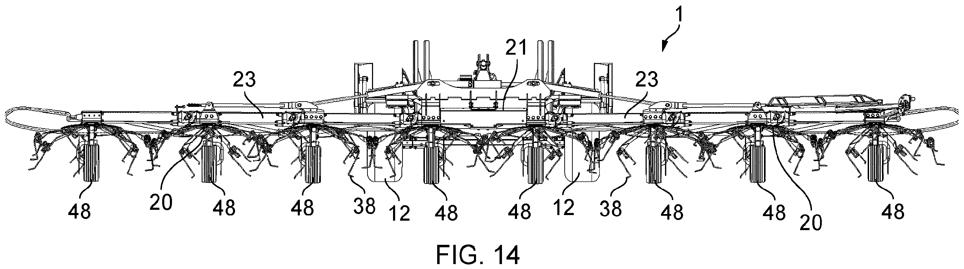

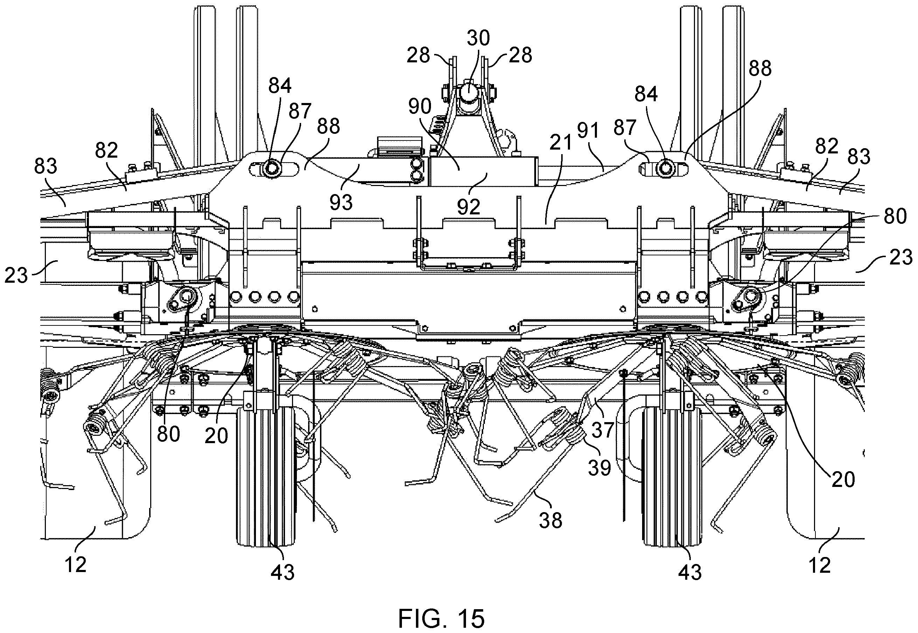

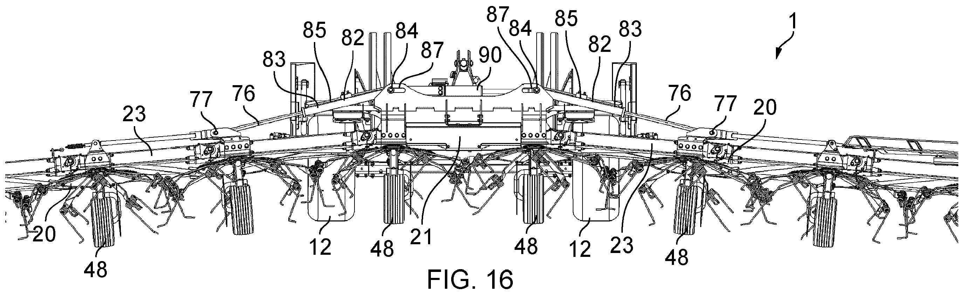

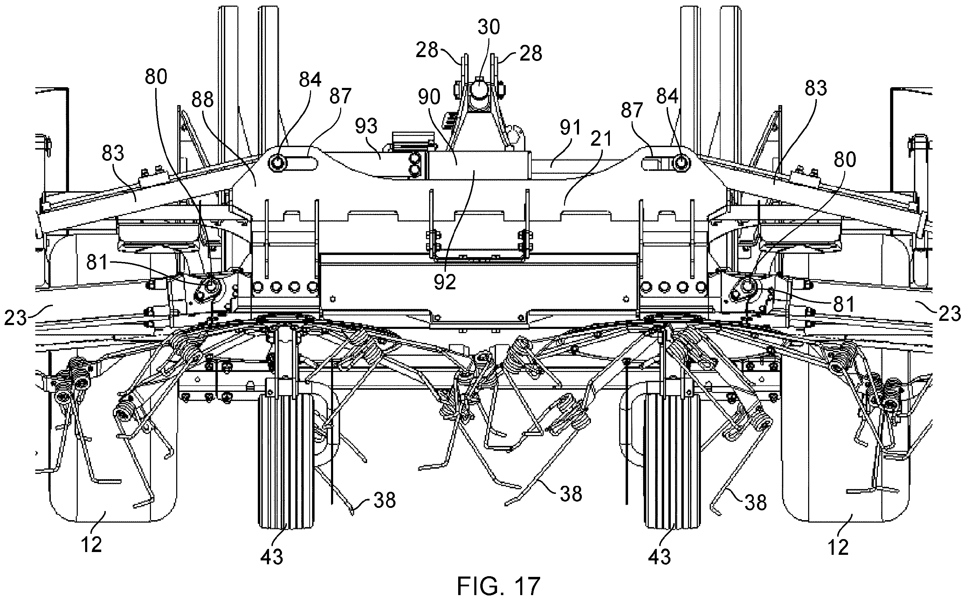

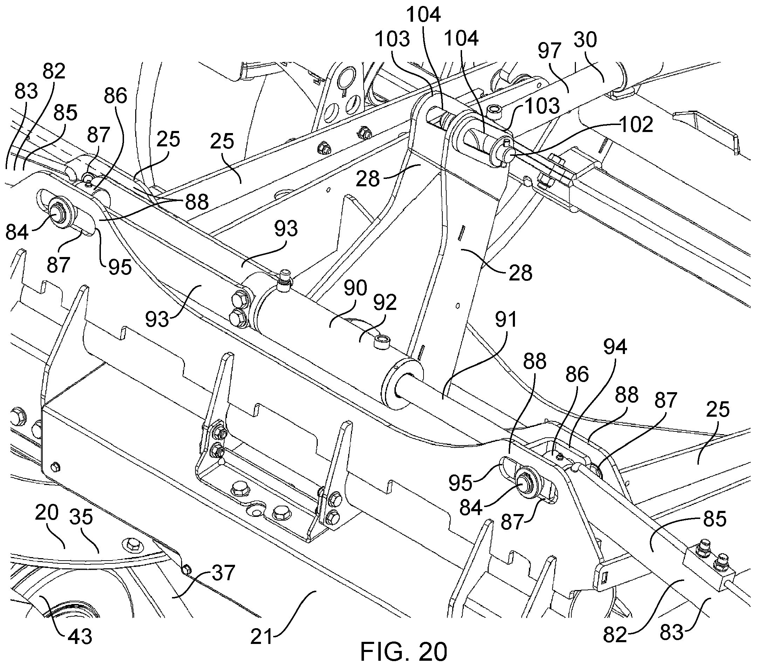

The central carrier 21 is carried on a pair of transversely spaced apart carrier members 25 which are pivotally coupled to the respective main pivot shafts 17 and extend rearwardly from the main pivot shafts 17 to the central carrier 21. The carrier members 25 are rigidly secured to the central carrier 21. A pair of spaced apart coupling members 28 extending rigidly from the central carrier 21 is connected to a main drive ram 30, which is described in more detail below. The main drive ram 30 is coupled between the coupling members 28 and a mounting bracket 31 mounted on the central chassis member 5 for pivoting the central carrier 21 about the main pivot axis 18 between the working state and the transport state, and also for retaining the central carrier 21 and in turn the carrier arms 23 in the working state, see Figs. 1, 2 and 14 to 20, as will be described below.

Each tedding rotor 20 comprises a circular disc element 35 fast on a drive shaft (not shown) extending from a corresponding gearbox 40 on the corresponding one of the central carrier 21 and the corresponding one of the carrier arms 23. The disc element 35 of each tedding rotor 20 is driven in rotation about its central axis 36 by the drive shaft (not shown) of the corresponding gearbox 40. The disc element 35 of each tedding rotor 20 rotates in a rotational plane, which is parallel to a rotational plane 34, which is defined by the drive shaft thereof, and which as will be described below defines an acute angle α of attack of the disc element 35, and in turn the tedding rotor 20 to the ground. The central axis 36 of each disc element 35 extends perpendicularly to the rotational plane 34. The gearboxes 40 are carried on the central carrier 21 and the corresponding carrier arm 23. A pair of transmission shafts (not shown) extending transversely from opposite sides of a central gearbox 41 located on the central carrier 21 transmit drive sequentially to the respective gearboxes 40 of the corresponding tedding rotors 20 on the central carrier 21 and to the gearboxes 40 of the tedding rotors 20 on the respective carrier arm 23 for driving the disc elements 35 of the tedding rotors 20.

Seven elongated tine carrier members 37 secured to the disc element 35 of each tedding rotor 20 adjacent the outer periphery of the disc element 35 extend radially outwardly from the disc element 35 at circumferentially equi-spaced apart intervals. Each tine carrier member 37 terminates at its distal end 39 in a pair of tines 38 which engage the hay or straw for turning thereof as the disc element 35 of the corresponding tedding rotor 20 rotates.

A suspension bracket 42 extends downwardly from each tedding rotor 20 and freely rotatably carries a corresponding ground engaging rotor wheel 43. The suspension brackets 42 are rotatable about the central axis 36 of the corresponding disc element 35. The construction, driving and operation of such tedding rotors 20 will be well known to those skilled in the art, and further description should not be required.

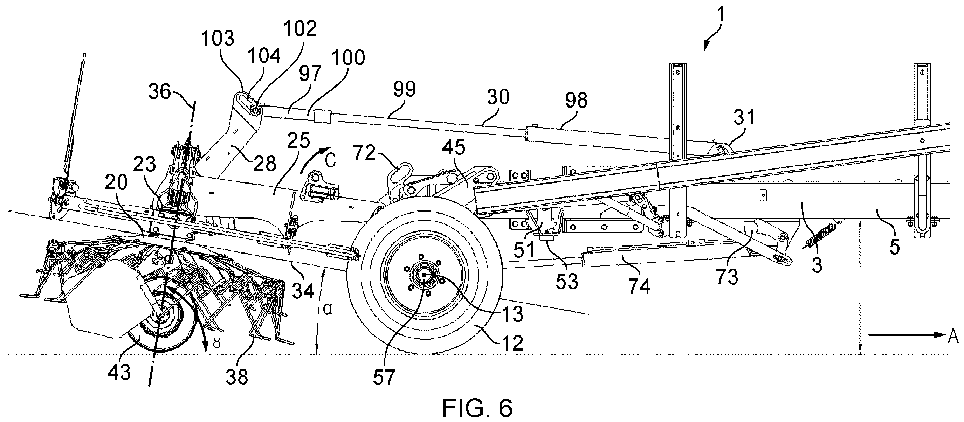

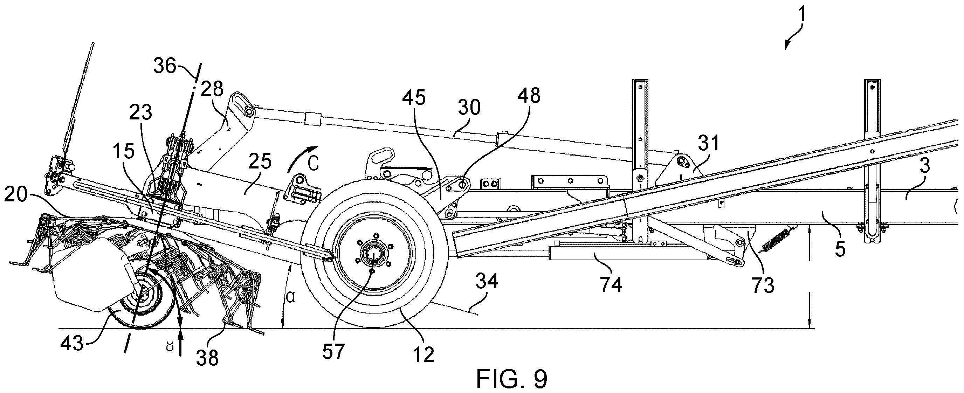

In the working state of the central carrier 21 and the carrier arms 23, the rotor ground engaging wheels 43 engage the ground, and follow the ground contour for maintaining the effective working height of the tedding rotors 20 and in turn the disc elements 35 thereof substantially constant above the ground. The tedding rotors 20 are mounted on the central carrier 21 and on the carrier arms 23, so that in the working state of the central carrier 21 and the carrier arms 23, the ground engaging rotor wheels 43 engage the ground with the rotational axis 36 of the disc element 35 inclining downwardly rearwardly towards the ground at an angle γ to the horizontal and to the ground, see Figs. 6 and 9. This in turn results in the disc elements 35 and the rotational planes thereof of the respective tedding rotors 20 being inclined forwardly downwardly at the angle α to the horizontal and to the ground. Accordingly, the tedding rotors 20 and the leading edges of the corresponding disc elements 35 as well as a locus defined by the distal ends 39 of the tine carrier members 37, as the disc elements 35 rotate, approach the ground at an acute angle of attack, namely, the angle of attack defined by the angle *α*. The angle of attack *α* is adjustable within a range of 10° to 16° to the ground in order to adjust the effective working height of the tines 38 relative to the ground, to accommodate different heights of lying crop material above the ground. As will be described in more detail below the angle of attack α of the tedding rotors 20 to the ground is adjusted by pivoting the central carrier 21 about the main pivot axis 18, for in turn varying the angle y of the central axes of the disc elements 35 to the ground, for in turn varying the angle of attack α of the tedding rotors 20 to the ground. The pivoting of the central carrier 21 about the main pivot axis 18 is achieved, as will be described below, by the cooperating action between the ground engaging rotor wheels 43 and the main ground engaging wheels 12 through the main pivot axis 18 as the main ground engaging wheels 12 are urged through the respective working states.

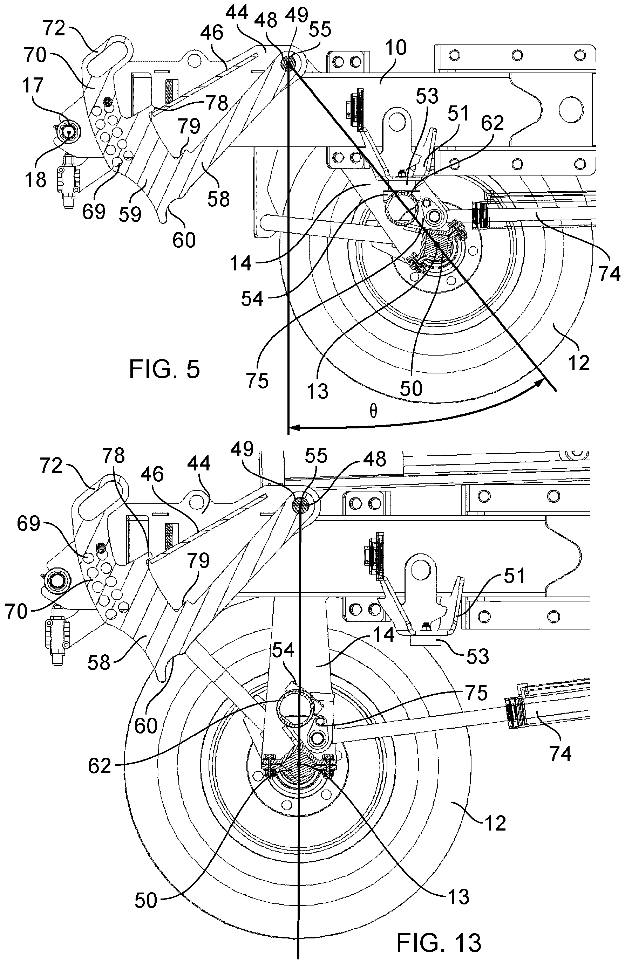

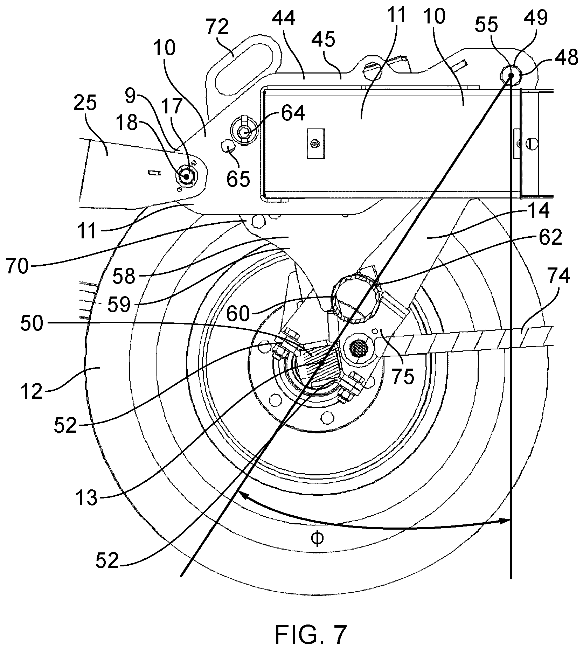

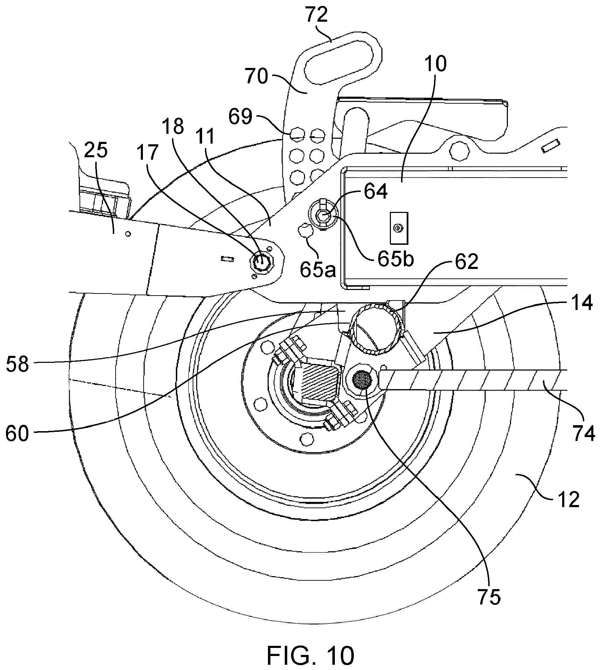

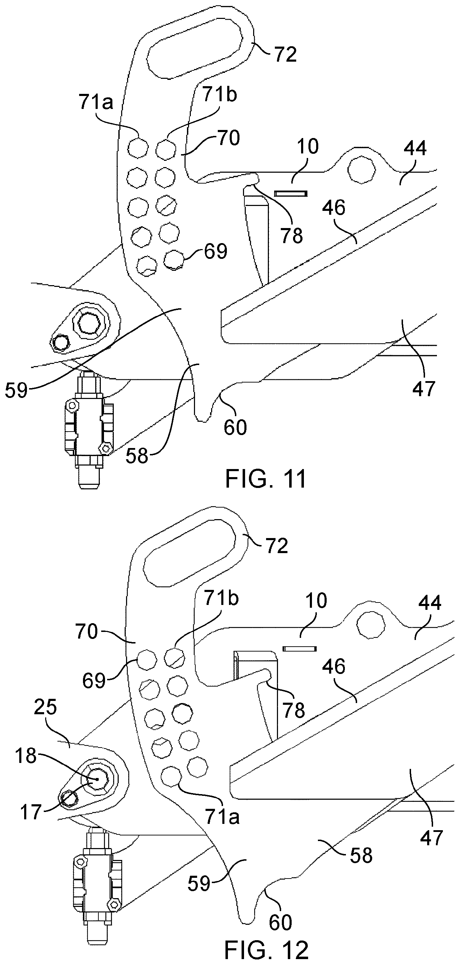

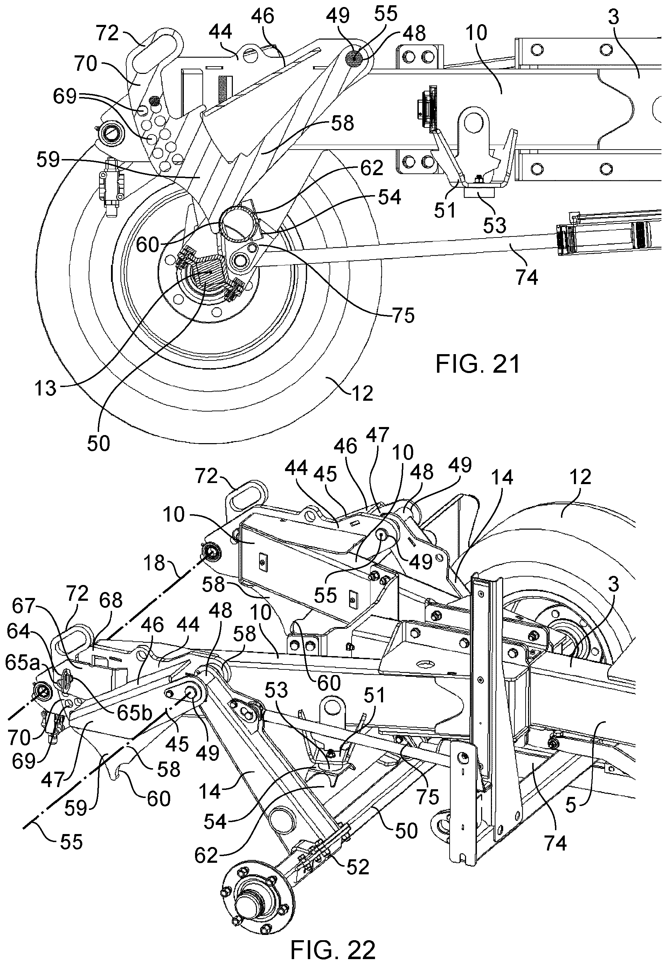

Turning now to the suspension of the main ground engaging wheels 12 by the suspension members 14 from the chassis 3, and referring in particular to Figs. 5 to 13, and also to Figs. 21 to 27, a pair of transversely spaced apart parallel side mounting members 45 are secured to the rearward chassis members 10 adjacent the rear ends 11 thereof and on the outer sides of the rearward chassis members 10. Each side mounting member 45 comprises a side plate member 44, which is secured to the rear end 11 of the corresponding rearward chassis member 10, and extends forwardly therefrom, so that the side plate members 44 extend generally forwardly from the rear end 11 of the rearward chassis members 10 parallel to each other and parallel to the central chassis member 5. A plate member bent to form a top wall 46 and a side wall 47 is welded to the corresponding side plate member 44 with the side wall 47 spaced apart from the corresponding side plate member 44.

Each suspension member 14 is pivotally suspended on a corresponding first pivot shaft 48 carried in aligned bores 49 in the side plate member 44 and the side wall 47 of the corresponding side mounting member 45. The bores 49 in the side plate members 44 and the side walls 47 of the side mounting members 45 are aligned together, so that the first pivot shafts 48 are carried in the side mounting members 45 to define a transversely extending common first pivot axis 55, about which the suspension members 14 are pivotal. The first pivot axis 55 extends parallel to the main pivot axis 18 and to the rotational wheel axis 13 of the main ground engaging wheels 12.

The suspension members 14 extend generally downwardly from the respective first pivot shafts 48 and terminate in and carry a transversely extending support axle 50 of square transverse cross-section. Securing brackets 52 rigidly secure the support axle 50 to the respective suspension members 14. A pair of carrier shafts 57 extending from the support axle 50 at respective opposite ends thereof rotatably carry the main ground engaging wheels 12 about the rotational wheel axis 13. A transversely extending abutment bar 62 extends transversely between, and is rigidly secured to the suspension members 14 for a purpose to be described below.

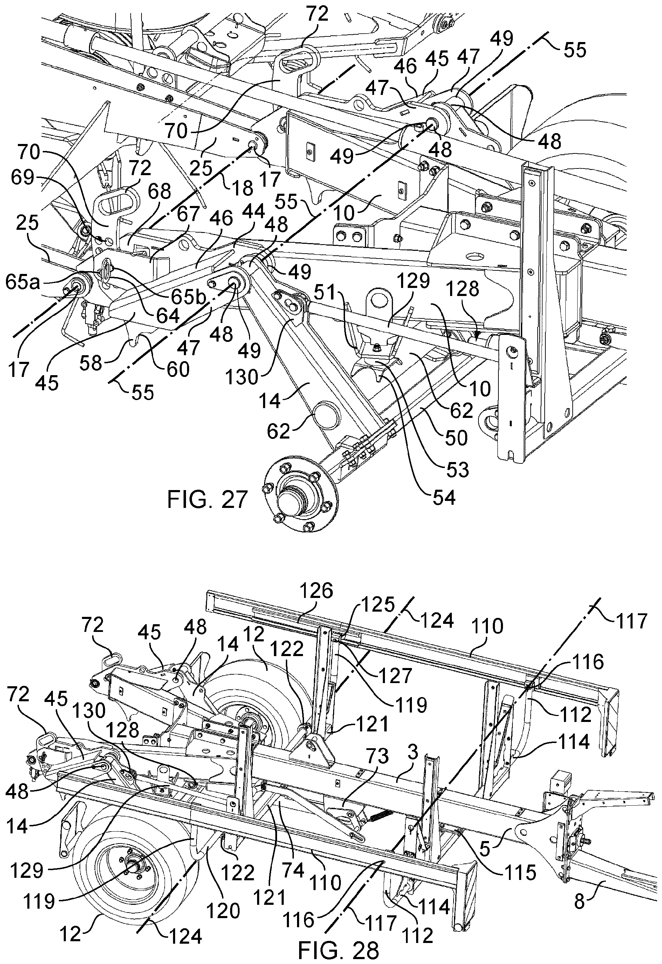

The suspension members 14 are pivotal about the first pivot axis 55 rearwardly from a forward transport position illustrated in Figs. 3 and 5 and also in Figs. 22 and 27 with the main ground engaging wheels 12 in a transport position, to a plurality of selectable rearward working positions, some of which are illustrated in Figs. 6 to 10 and Figs. 21, 24 and 25 with the main ground engaging wheels 12 in corresponding working positions for altering the angle *α* of attack of the tedding rotors 20 to the ground. Adjusting the angle of attack of the tedding rotors 20 results in adjustment of the effective working height of the tines 38 relative to the ground, which are adjacent leading portions of the loci defined by the distal ends 39 of the tine carrier members 37, as the tedding rotors 20 rotate, as will be described below. The working positions of the suspension members 14 and of the main ground engaging wheels 12 are also described in more detail below.

With the main ground engaging wheels 12 in the forward transport position, the load of the tedder apparatus 1 with the carrier 15 in the transport state is more evenly balanced about the rotational wheel axis 13. A pair of transversely spaced apart resilient stop members 53 mounted on respective carrier brackets 51 extending downwardly from the respective rearward chassis members 10 of the chassis 3 are engageable with a pair of correspondingly transversely spaced apart engagement plate members 54 carried rigidly on the abutment bar 62 extending between the suspension members 14, for retaining the suspension members 14 and the main ground engaging wheels in the transport position.

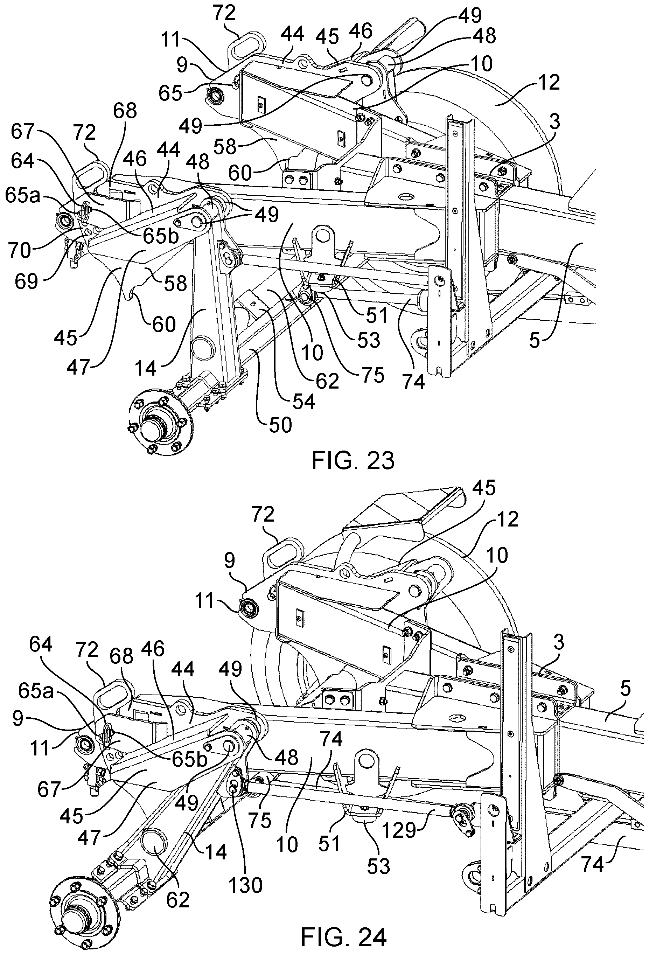

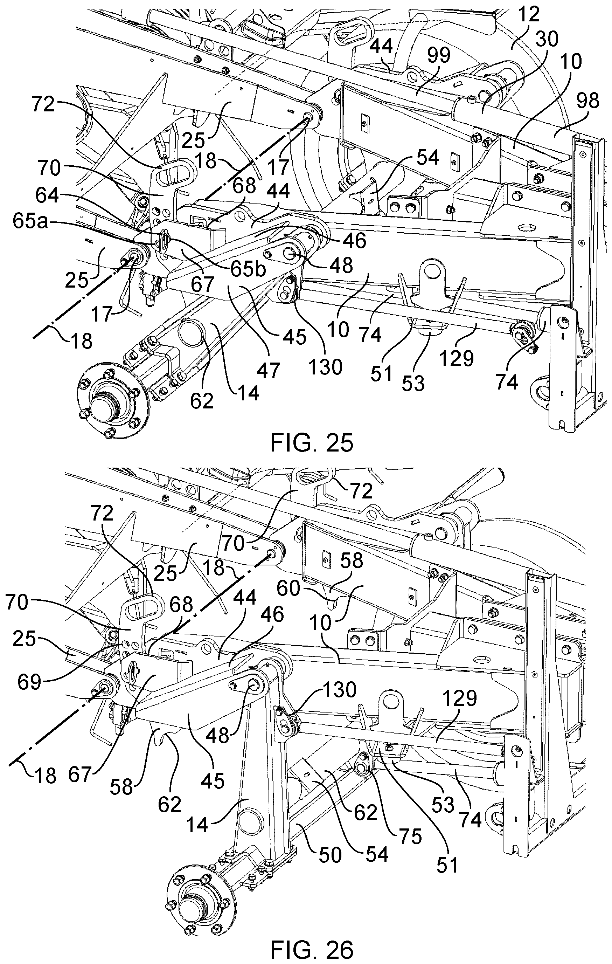

The suspension members 14 are initially urgeable rearwardly and downwardly from the transport position through a bottom dead centre position thereof and then rearwardly and upwardly from the bottom dead centre position incrementally through the selectable working positions. The bottom dead centre position of the suspension members 14 and the main ground engaging wheels 12 is illustrated in Fig. 13 and also in Figs. 23 and 26. In the bottom dead centre position, the suspension members 14 extend substantially vertically downwardly from the first pivot axis 55, and the rotational wheel axis 13 of the main ground engaging wheels 12 and the first pivot axis 55 lie in a substantially vertical plane extending transversely of the central chassis member 5. The suspension members 14 when in the transport position are at a forward angle θ from the bottom dead centre position thereof, which in this embodiment of the invention is approximately 40°. The suspension members 14 are urgeable rearwardly from the bottom dead centre position thereof through a maximum rearward angle φ, which in this embodiment of the invention is 50°.

A limit means urgeable through a plurality of selectable limit positions is co-operable with the suspension members 14 for selectively retaining the suspension members 14 in corresponding ones of the selectable working positions. The limit means comprises a pair of transversely spaced apart limit members 58 formed in respective limit plates 59. The limit members 58 are pivotal about a common second pivot axis through the respective limit positions. In this embodiment of the invention the second pivot axis about which the limit members 58 are pivotal coincides with the first pivot axis 55 about which the suspension members 14 are pivotal, and the limit members 58 are pivotally carried on the respective first pivot shafts 48. Each limit member 58 comprises a first abutment means, namely, a first abutment recess 60 for abutting and engaging a corresponding second abutment means, which in this embodiment of the invention comprises the abutment bar 62 extending between and rigidly secured to the suspension members 14 for retaining the suspension members 14 in the respective working position, and in turn for retaining the main ground engaging wheels 12 in the corresponding working positions.

Retaining means for retaining the respective limit members 58 in the selectable limit positions, comprise respective retaining plates 70 also formed in the corresponding limit plates 59 of the corresponding limit members 58. Each retaining plate 70 passes between the side plate member 44 of the corresponding side mounting member 45 and an anchor plate 67 welded to and spaced apart from the corresponding side plate member 44. Each anchor plate 67 with the corresponding side plate member 44 defines a slot 68, through which the corresponding retaining plate 70 is moveable, as the corresponding limit member 58 pivots through the limit positions.

A pair of spaced apart anchor bores 65a and 65b are provided in the side plate member 44 and in the anchor plate 67 of each side mounting member 45 for releasably engaging a corresponding clevis pin 64. Each of the pair of anchor bores 65a and 65b in the anchor plate 67 of each side plate member 44 are aligned with the corresponding anchor bores 65a and 65b of the side plate member 44 for releasably engaging the clevis pin 64.

A plurality of selectable securing bores 69 are provided in each retaining plate 70, and are selectively alignable with respective corresponding ones of the anchor bores 65a and 65b in the side plate member 44 and the anchor plate 67 of the corresponding side mounting member 45, and are engageable with the corresponding clevis pin 64 for retaining the corresponding limit member 58 in the respective limit positions. Each retaining plate 70 terminates in a handle 72 for manually pivoting the corresponding limit member 58 about the first pivot axis 55, for in turn manually setting the corresponding limit member 58 in a desired one of the selectable limit positions.

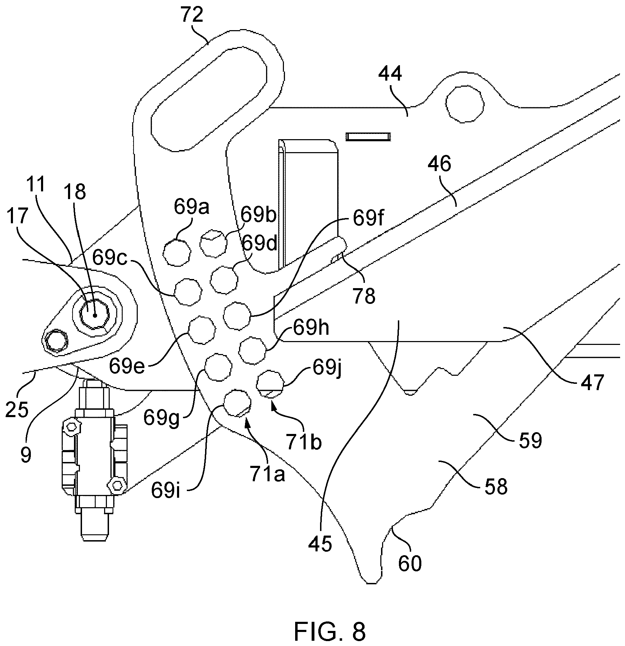

In this embodiment of the invention each retaining plate 70 is provided with ten securing bores 69a to 69j, which are arranged in two rows, namely, rows 71a and 71b with five securing bores 69 in each row, see Figs. 8, 11 and 12. Each securing bore 69 corresponds with one of the selectable limit positions of the corresponding limit members 58. Accordingly, the ten securing bores 69 in each retaining plate 70 correspond with ten selectable limit positions of the limit members 58, and in turn ten selectable working positions of the suspension members 14 and the main ground engaging wheels 12. The securing bores 69a, 69c, 69e, 69g and 69i in the row 71a of each retaining plate 70, are selectively alignable with the anchor bores 65a in the anchor plate 67 and the side plate member 44 of the corresponding side mounting member 45. The securing bores 69b, 69d, 69f, 69h and 69j in the row 71b of each retaining plate 70 are selectively alignable with the anchor bores 65b in the anchor plate 67 and the side plate member 44 of the corresponding side mounting member 45. The securing bores 69 of each retaining plate 70 are arranged in the rows 71, so that by sequentially engaging the securing bores 69 alternately from the rows 71a and 71b with the clevis pin 64 in the corresponding ones of the anchor bores 65a or 65b in the anchor plate 67 and the side plate member 44 of the corresponding side mounting member 45, the corresponding limit member 58 is incrementally urged through the respective ten limit positions.

Accordingly, the first of the ten selectable working positions of the suspension members 14 is set by the limit members 58 when the clevis pins 64 are engaged in the anchor bores 65a of the anchor plates 67 and the side plate members 44 and in the first one of the securing bores, namely, the securing bore 69a of the retaining plates 70. In this position, the suspension members 14 are set at an angle φ of 30° rearwardly from the bottom dead centre position. The second of the ten selectable working positions of the suspension members 14 is set by the limit members 58 when the clevis pins 64 are engaged in the anchor bores 65b of the anchor plates 67 and the side mounting plate members 44, and in the second one of the securing bores, namely, the securing bore 69b of the retaining plate 70. The third of the ten selectable working positions of the suspension members 14 is set by the limit members 58 when the clevis pins 64 are engaged in the anchor bores 65a of the anchor plates 67 and the side mounting members 44 and in the third one of the securing bores, namely, the securing bore 69c of the retaining plates 70, and so on by alternately selecting the securing bores 69 from the rows 71a and 71b of the securing bores 69 up to the tenth and last one of the selectable working positions of the suspension members 14.

The tenth working position of the suspension members 14 is set by engaging the clevis pins 64 in the anchor bores 65b of the anchor plates 67 and the side plate members 44 and in the tenth one of the securing bores, namely, the securing bore 69j of the retaining plates 70. In this the tenth and last of the working positions of the suspension members 14, the suspension members 14 are set at an angle φ of 50° rearwardly from the bottom dead centre position.

The ten securing bores 69 in the retaining plates 70 are spaced apart so that the ten selectable working positions of the suspension members 14, and in turn the selectable working positions of the main ground engaging wheels 12 are equi-spaced apart from the first selectable working position to the tenth and last selectable working position. Accordingly, the angular spacing between adjacent working positions of the suspension members 14 is 2°.

As the main ground engaging wheels 12 are urged rearwardly incrementally through the ten selectable working positions from the first working position to the tenth and last working position, the downward spacing between the wheel axis 13 and the chassis 3 is decrementally reduced, which in turn decrementally reduces the level of the main pivot axis 18, above the level of the wheel axis 13. This in turn results in incremental upward pivoting of the central carrier 21 about the main pivot axis 18 in the direction of the arrow C, see Figs. 6 and 9, which in turn results in the angle of attack *α* of the tedding rotors 20 to be incrementally increased from an angle α of 10° to 16°. Increasing the angle of attack α of the tedding rotors 20 results in the effective working height above the ground of the tines 38 adjacent the leading parts of the loci defined by the distal ends 39 of the tine carrier members 37 being decrementally reduced. Accordingly, by incrementally urging the suspension members 14, and in turn the main ground engaging wheels 12 rearwardly through the ten selectable working positions, from the first to the tenth and last of the working positions, the effective working height of the tines 38 of the tedding rotors 20 is decrementally reduced for accommodating different heights at which the lying crop material lies on the residual stubble above the ground.

By urging the main ground engaging wheels 12 forwardly from the bottom dead centre position of the suspension members 14 to the transport position thereof ensures that the main ground engaging wheels 12 remain in the transport position during transporting of the tedder apparatus on a public road or other thoroughfare.

An urging means for urging the suspension members 14 and in turn the main ground engaging wheels 12 from the transport position to a selectable ones of the working positions comprises a linear actuator, in this embodiment of the invention an hydraulic ram 74. The hydraulic ram 74 is operably connected between the chassis 3 and the abutment bar 62 of the suspension members 14. The hydraulic ram 74 is connected to the chassis 3 by a mounting bracket 73 mounted on the central chassis member 5, and is connected to the abutment bar 62 by a connecting bracket 75 mounted on the abutment bar 62.

Maximum and minimum limit stops 78 and 79, respectively, formed in each retaining plate 70 are engageable with the top wall 46 of the corresponding side mounting member 45 for limiting the travel of the corresponding limit member 58 downwardly beyond the first limit position, and upwardly beyond the tenth limit position, respectively.

While the limit members 58 have been described as being pivotal about the first pivot axis 55, it is envisaged that in some embodiments of the invention the limit members 58 may be pivotally coupled about a second pivot axis spaced apart from the first pivot axis 55. In which case, the limit members 58 would be pivotally carried on second pivot shafts, which would define the second pivot axis. The second pivot shafts would be carried on any suitable part of the side mounting members 45 or on the chassis 3.

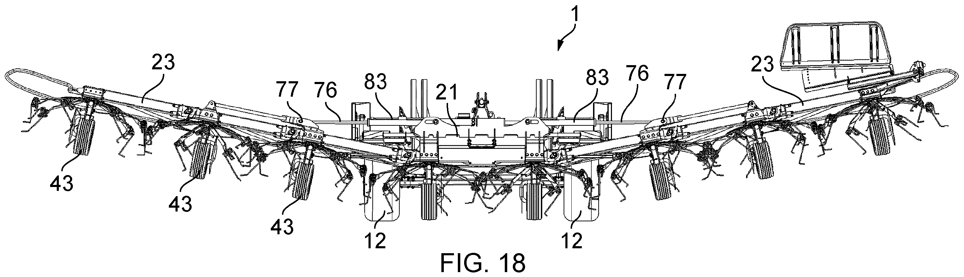

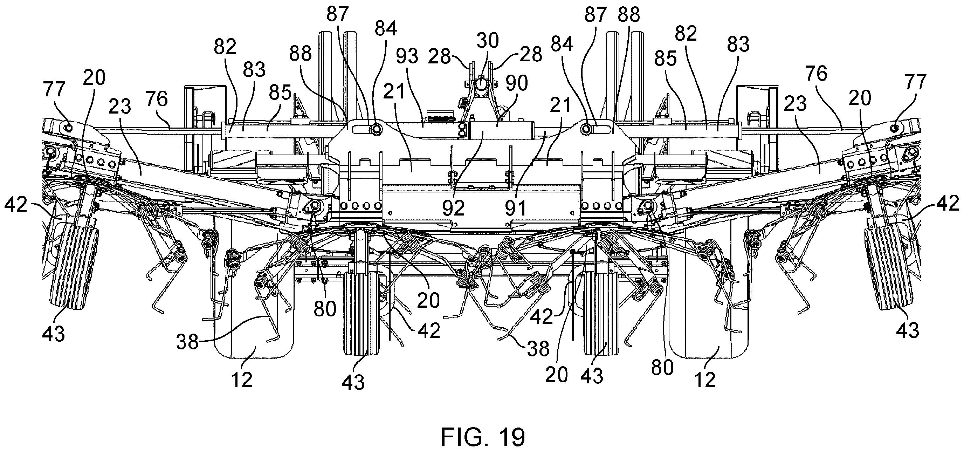

Returning now to the carrier 15, the carrier arms 23 of the carrier 15 are pivotally coupled to the central carrier 21 by respective third pivot shafts 80. The third pivot shafts 80 define respective third pivot axes 81 extending parallel to each other, and in the working state of the carrier 15 extending substantially in a generally forwardly direction. The carrier arms 23 are pivotal about the respective third pivot axes 81 for three purposes, firstly, for pivoting the carrier arms 23 relative to the central carrier 21 for folding the carrier arms 23 relative to the central carrier 21 from the working state into the transport state, secondly, when in the working state to facilitate limited pivotal movement of the carrier arms 23 about the third pivot axes 81 relative to the central carrier 21 for accommodating ground of uneven contour, and thirdly, for pivoting the carrier arms 23 about the third pivot axes 81 into an intermediate state illustrated in Figs. 18 and 19, for ease of manoeuvring the tedder apparatus 1 adjacent a headland of a field.

The carrier arms 23 are supported in the workings state by respective connecting means, namely, connecting members 82 which in this embodiment of the invention comprise connecting rams 83. The connecting rams 83 are configured for pivoting the carrier arms 23 relative to the central carrier 21 about the third pivot axes 81 from the working state to the transport state. The connecting rams 83 are also configured when extended to support the carrier arms 23 in the working state to be rigid. The limited pivotal movement of the carrier arms 23 relative to the central carrier 21 is accommodated by the coupling of the connecting rams 83 to the central carrier 21, as will be described below.

Each connecting ram 83 comprises a cylinder 85 and a piston rod 76. The piston rods 76 of the connecting rams 83 are pivotally coupled to the carrier arms 23 at 77. A proximal end 86 of the cylinder 85 of each connecting ram 83 terminates in a guide pin 84 which extends on either side of the cylinder 85. The guide pin 84 of each connecting ram 83 is slideably and pivotally engageable in a corresponding pair of guide slots 87 located in corresponding slotted guide members 88. The slotted guide members 88 are located adjacent the respective opposite ends 24 of the central carrier 21. The travel of the guide pins 84 of each connecting ram 83 in the guide slots 87 permits the limited pivotal movement of the carrier arms 23 about the third pivot axes 81 upwardly and downwardly above and below the normal horizontal working state of the carrier arms 23. In this embodiment of the invention the limited pivotal movement of the carrier arms 23 about the third pivot axes 81 above the horizontal state thereof is approximately 2°, and the limited pivotal movement below the horizontal state of the carrier arms 23 is also approximately 2°.

A variable length coupling means for coupling the connecting rams 83 comprises a central urging means comprising a central ram 90 having a cylinder 92 and a piston rod 91 extending from the cylinder 92. The central ram 90 is connected between the proximal ends 86 of the connecting rams 83. The central ram 90 comprises a single acting ram, and the piston rod 91 is spring returned into the cylinder 92. The piston rod 91 of the central ram 90 terminates in a U-shaped coupler 94, which is pivotally engageable with the guide pins 84 of one of the connecting rams 83 for pivotally coupling the central ram 90 to the proximal end 86 of that connecting ram 83. A pair of connecting members 93 extending from the cylinder 92 of the central ram 90 are pivotally connected to the guide pin 84 of the other one of the connecting rams 83 for pivotally coupling the central ram 90 to that connecting ram 83.

The central ram 90 serves two functions, firstly, it is operable for urging the proximal ends 86 of the connecting rams 83 towards each other with the guide pins 84 being urged to inner limit ends 95 of the corresponding guide slots 87, as illustrated in Figs. 18 and 19, for raising the carrier arms 23 into the intermediate state for ease of manoeuvring the tedder apparatus 1 around a headland, and secondly, to allow the limited pivotal movement of the carrier arms 23 relative to the central carrier 21 for accommodating ground of uneven contour.

In order to serve these two functions, the central ram 90 is selectively operable in two states, namely, in a first state, in which the central ram 90 is powered, and in a second state, in which the central ram 90 is not powered. In the first state the central ram 90 is powered to urge the proximal ends 86 of the connecting rams 83 towards each other, with the guide pins 84 adjacent the inner limit ends 95 of the guide slots 87, to thereby raise the carrier arms 23 into the intermediate states thereof. In the second state, the central ram 90 is not powered and is in a floating state, and the piston rod 91 thereof is free to move inwardly and outwardly against the spring action of a return spring (not shown) thereof. Additionally, in the second state thereof, the central ram 90 is free to move transversely between the slotted guide members 88 to accommodate movement of the proximal ends 86 of the connecting rams 83 towards and away from each other, and independently of each other, with the guide pins 84 freely slideable in the guide slots 87 between the inner limit ends 95 and outer limit ends 96 thereof. Therefore, in the second state of the central ram 90, the limited pivotal movement of the carrier arms 23 independently of each other upwardly and downwardly about the third pivot axes 81 is accommodated.

In this embodiment of the invention the central ram 90 and the slotted guide members 88 are configured, so that in the intermediate state of the carrier arms 23, the carrier arms 23 are raised by the central ram 90 about the third pivot axes 81 through an angle of approximately 7° from the normal horizontal working state thereof.

Turning now to the coupling members 28 and the main ram 30, the main ram 30 is configured as a pair of rams 97 and 98 having a common piston rod 99. The ram 97 is configured for raising the central carrier 21 from the working state to an intermediate state to allow the carrier arms 23 to be pivoted about the third pivot axes 81 from the working state to the transport state without damaging the tedding rotors 20 on the ground. The ram 98 is configured for rising the central carrier 21 from the intermediate state to the transport state. A cylinder 100 of the ram 97 is adjustably coupled to the coupling members 28 by a guide pin 102 which is slideably engageable in corresponding guide slots 104 in respective distal ends 103 of the coupling members 28 for facilitating pivotal movement of the central carrier 21, about the main pivot axis 18 for two purposes. Firstly, to accommodate limited pivotal movement of the central carrier 21 about the main pivot axis 18 as the two tedding rotors 20 of the central carrier 21 rise and fall in order to follow ground of uneven contour. Secondly, to accommodate the incremental angular pivoting of the central carrier 21 about the main pivot axis 18, as the effective working height of the tedding rotors 20 above the ground is being adjusted by urging the main ground engaging wheels 12 rearwardly through the selectable working positions thereof.

A drive transmission shaft 105 configured for coupling to a power take-off shaft of a tractor extends along and through the central chassis member 5 and terminates in the central gearbox 41 from which drive to the gearboxes 40 of the tedding rotors 20 is transmitted. The transmission of drive from a power take-off shaft of a tractor to tedding rotors 20 of tedder apparatus will be well understood by those skilled in the art and further description should not be required.

Referring now in particular to Figs. 28 to 32, the tedder apparatus 1 comprises a pair of transversely spaced apart protective side bars 110 located on respective opposite sides of the chassis 3. The protective side bars 110 are moveable from a working state, illustrated in Figs. 1, 2, 29 and 32, to a raised transport state, illustrated in Figs. 3, 28 and 31, for preventing close contact with the tines 38 of the rotors 20 when the tedder apparatus 1 is in the transport state. The protective side bars 110 extends substantially the length of the chassis from the forward end 7 thereof to the rearward end 9 thereof, and are pivotally carried on a pair of upstanding forward support members 112 and a pair of rearward support members 119 extending upwardly from the chassis 3. The forward support members 112 extend upwardly from a transversely extending forward cross-member 114 which is rigidly secured to the central chassis member 5 at 115. A pair of fourth pivot shafts 116 carried on the forward support members 112, pivotally carry the protective side bars 110 about a transversely extending fourth pivot axis 117 defined by the pivot shafts 116.

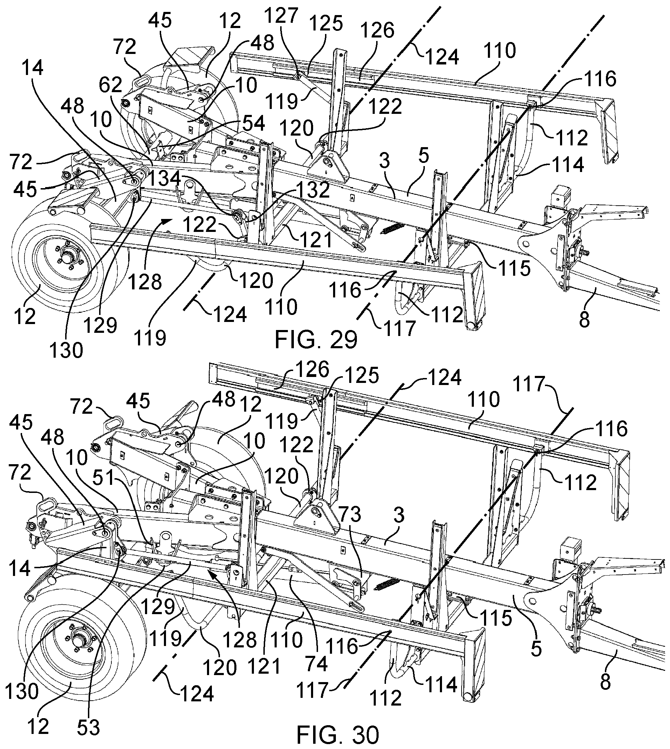

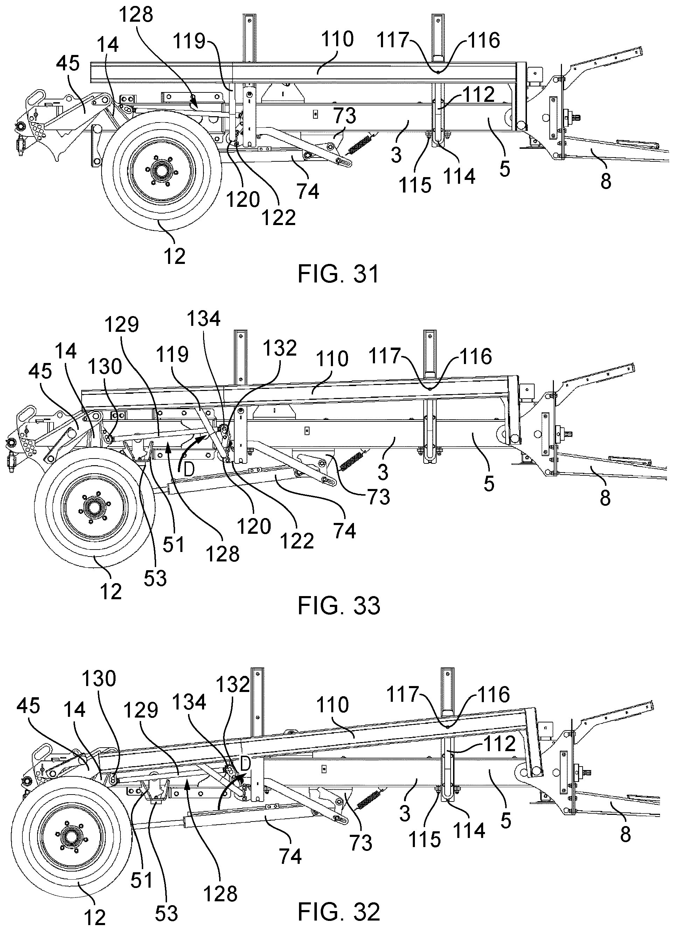

The rearward support members 112 are pivotally coupled to the chassis 3 and are pivotally and slideably coupled to the respective protective side bars 110 for urging the protective side bars 110 between the working state and the transport state. The rearward support members 119 are integrally formed with a rearward transversely extending fifth pivot shaft 120 and extend perpendicularly from the pivot shaft 120 and parallel to each other. The fifth pivot shaft 120 is pivotally coupled to a chassis cross-member 121 of the chassis 3 by a pair of transversely spaced apart pivot mounting brackets 122, which are secured to the chassis cross-member 121. The pivot mounting brackets 122 define a transversely extending fifth pivot axis 124, about which the fifth pivot shaft 120 and the rearward support members 119 are pivotal between a first state, illustrated in Figs. 29 and 32, with the protective side bars 110 in the working state, and a second state, illustrated in Figs. 28 and 31, with the protective side bars 110 in the transport state.

The rearward support members 119 pivotally carry respective slider members 125 which are slideably engaged in longitudinally extending corresponding guide tracks 126 on the respective protective side members 110. Pivot shafts 127 carried on the rearward support members 119 pivotally carry the slider members 125.

In this embodiment of the invention the rearward support members 119 and in turn the protective side bars 110 are responsive to forward movement of the main ground engaging wheels 12 from any one of the selectable working positions thereof, to the transport position for urging the rearward support members 119 from the first state to the second state for in turn urging the protective side bars 110 from the working state to the transport state.

A pair of transversely spaced apart linkage mechanisms 128 operably coupled between the respective suspension members 14 and the rearward support members 119 urge the rearward support members 119 from the first state to the second state about the fifth pivot axis 124, for in turn urging the protective side bars 110 from the working state to the transport state as the suspension members 14 pivot about the first pivot axis 55 from any one of the selectable working positions to the transport positions. Each linkage mechanism 128 comprises a first link member 129 pivotally coupled by a pivot mounting bracket 130 to the corresponding suspension member 14, and a second link member 132 extending rigidly and perpendicularly from the fifth pivot shaft 120 coupled to the first link member 129, by a pivot pin 134.

Accordingly, as the suspension members 14 are being urged forwardly from any one of the working positions thereof, to the transport position, the linkage mechanisms 128 pivot the fifth pivot shaft 120 and in turn the rearward support members 119 about the fifth pivot axis 124 from the first state to the second state in the direction of the arrow D. As the rearward support members 119 are pivoting from the first state to the second state, the slider members 125 slide in a forward direction in the guide tracks 126 on the respective protective side members 110, for in turn urging the protective side members 110 about the fourth pivot axis 117 from the working state to the transport state.

In use, with the carrier arms 23 and the central carrier 21 in the transport state, and the main ground engaging wheels 12 in the transport state, the tedder apparatus 1 is ready for towing along a public roadway or a thoroughfare to a field in which hay, straw or other crop material is to be teddered. On reaching the field, the tedder apparatus is operated from the transport state to the working state. Initially, the ram 98 of the main ram 30 is operated for urging the central carrier 21 from the transport state to the intermediate state thereof. The connecting rams 83 are then operated for urging the carrier arms 23 about the third pivot axes 81 from the transport state to the working state. The ram 97 of the main ram 30 is then operated for urging the central carrier 21 and the carrier arms 23 into the working state.

The retaining plates 70 of the limit members 58 are then secured to the corresponding anchor plates 67 and the side plate members 44 by the respective clevis pins 64 engaging the appropriate ones of the anchor bores 65 in the anchor plates 67 and the side plate members 44, and the respective appropriate ones of the securing bores 69 in the retaining plates 70 for setting the respective limit members 58 in the desired limit position, for in turn setting the main ground engaging wheels in the desired one of the selectable working positions. With the limit members 58 secured by the retaining plates 70 in the desired limit position, the hydraulic ram 74 is operated from urging the suspension members 14 rearwardly from the transport position until the abutment bar 62 engages the abutment recesses 60 in the limit members 58, thereby setting the suspension members 14 in the selected working position. With the suspension members 14 in the selected working position, the main ground engaging wheels 12 are now in the corresponding selected one of the selectable working positions thereof. With main ground engaging wheels 12 in the selected working position, the tines 38 of the tedding rotors 20 are set at the desired effective working height above the ground. With the main ground engaging wheels 12 in the selected one of the selectable working positions, the tedder apparatus 1 is ready for use.

The drive transmission shaft 105 is connected to the power take-off shaft of the towing tractor, and the central ram 90 is set to operate in the second state.

As the tedder apparatus 1 is being towed by the tractor, the tedding rotors 20 tedder the hay, straw or other crop material lying in the field. With the central ram 90 in the second state, the carrier arms 23 are free to pivot about the third pivot axes 81 through the limited pivotal movement allowed by the movement of the guide pins 84 in the guide slots 87 of the slotted guide members 88 mounted on the respective opposite ends 24 of the central carrier 21, in order to accommodate uneven ground.

When the tedder apparatus 1 is to be manoeuvred at a headland, the central ram 90 is operated into the first state to urge the connecting rams 83 towards each other until the guide pins 84 engage the inner limit ends 95 of the guide slots 87 in the guide members 88 to raise the carrier arms 23 into an intermediate state, for manoeuvring the tedder apparatus 1 around the headland. On the tedder apparatus 1 having been manoeuvred around the headland, the central ram 90 is again operated into the second state and operation of the tedder apparatus continues.

When the tedding of the hay, straw or other crop material in the field has been completed, the tedder apparatus is operated from the working state to the transport state. The central carrier 21 and the carrier arms 23 are urged from the working state to the transport state. Initially the ram 97 of the main ram 30 is operated to pivot the central carrier 21 about the main pivot axis 18 from the working state to the intermediate state thereof. The connecting rams 83 are then operated for pivoting the carrier arms 23 about the third pivot axes 81 from the working state to the transport state thereof. The ram 98 of main ram 30 is then operated for urging the central carrier 21 from the intermediate state to the transport state. At this stage, the carrier 15 comprising the central carrier 21 and the carrier arms 23 are fully in the transport state. The ram 74 is operated for urging the suspension members 14 and in turn the main ground engaging wheels 12 forwardly from the selected working position to the transport position. The tedder apparatus 1 is then ready for towing on a public roadway or thoroughfare.

While the main ground engaging wheels 12 have been described as being carried on a pair of suspension members 14 pivotally carried on the chassis about a first pivot axis, it will be appreciated that in some embodiments of the invention a single suspension member may be sufficient. It will also of course be appreciated that the main ground engaging wheels 12 may be carried on a suspension means, other than a pivotally mounted suspension means. For example, it is envisaged that the ground engaging wheels 12 may be carried on a suspension means, which would include a camming arrangement, which would urge the main ground engaging wheels progressively upwardly as the main ground engaging wheels are being urged rearwardly from the transport position through the selectable working positions.

It will also be appreciated that while the connecting members 82 have been described as comprising connecting rams 83, any other suitable connecting means may be provided for supporting the carrier arms 23 in the working state. It will also be appreciated that the connecting means instead of being adjustably coupled to the central carrier, the connecting means may be adjustably coupled to the carrier arms for permitting the limited pivotal movement of the carrier arms about the third pivot axes for accommodating ground of uneven contour.

While the urging means for urging the main ground engaging wheels between the transport position and the selectable working positions has been described as comprising an hydraulic ram, any other suitable actuator, or indeed, any other suitable urging means may be provided.

It will also be appreciated that any other suitable limit means besides a pair of transversely spaced apart limit members may be provided, and indeed, in some embodiments of the invention a single limit member may be sufficient.

Needless to say, the limit members may be provided of any other suitable construction besides being provided by plate members. It is also envisaged that the limit means may be provided on the suspension means, and in which case, the limit means would be adjustable relative to the suspension means between respective selectable limit positions. In cases where the limit means is provided on the suspension means, the limit means would be engageable with an abutment means located on the chassis.

While in the embodiment of the tedder apparatus 1 according to the invention the suspension means and the ground engaging wheels have been described as being incrementally moveable through the respective working positions, it is envisaged that in some embodiments of the invention the suspension means and the ground engaging wheels would be urgeable through the working positions thereof progressively, rather than incrementally. In such an embodiment of the invention, the retaining means, instead of being provided in the form of a retaining plate with the securing bores 69, a screw-jack arrangement could be provided whereby the engagement plate would be replaced by an elongated screw-threaded member rotatably carried in the corresponding limit means, and the screw-threaded member would be engageable with a threaded nut or other suitable internally threaded element secured to the chassis, for example, secured to the side plate member 44 of the corresponding side mounting member 45 so that as the elongated screw-threaded member is rotated in the internally threaded element, the corresponding limit means would be urged progressively through an infinite number of limit positions, which in turn would result in the suspension means and the ground engaging wheels being urged through an infinite number of selectable working positions.

## Claims

1. A tedder apparatus for hitching to a prime mover, the tedder apparatus comprising an elongated chassis (3) extending from a rearward end (9) to a forward end (7) in the direction of normal forward travel of the apparatus, a carrier (15) pivotally coupled to the chassis (3) adjacent the rearward end thereof about a main pivot axis (18) extending transversely of the chassis (3), the carrier (15) carrying a plurality of tedding rotors (20), and being foldable from a working state extending transversely of the chassis (3) with the tedding rotors (20) spaced apart along the carrier (15), to a transport state with at least one portion of the carrier (15) extending substantially parallel to the chassis (3), each tedding rotor (20) comprising a corresponding rotatably mounted ground engaging rotor wheel (43) engageable with the ground when the carrier (15) is in the working state, a pair of transversely spaced apart main ground engaging wheels (12) carried on a suspension means (14) for supporting the chassis (15), the main ground engaging wheels (12) being rotatable about a common rotational wheel axis (13), **characterised in that** the suspension means (14) is configured to constrain the main ground engaging wheels (12) to be urgeable rearwardly relative to the chassis (15) from a forward transport position to a plurality of spaced apart selectable working positions with the downward spacing of the common rotational wheel axis (13) from the chassis (15) progressively or decrementally reducing as the main ground engaging wheels (12) are urged rearwardly through the respective working positions for progressively or decrementally reducing the effective working height of the tedding rotors (20) above the ground.

2. A tedder apparatus as claimed in Claim 1 **characterised in that** the suspension means (14) is coupled to the chassis (3) so that as the main ground engaging wheels (12) are urged rearwardly through the respective working positions, the level of the main pivot axis (18) above the level of the common rotational wheel axis (13) is progressively or decrementally reduced.

3. A tedder apparatus as claimed in Claim 1 or 2 **characterised in that** the suspension means (14) is pivotally coupled to the chassis (3) about a first pivot axis (55) extending transversely of the chassis (3), the suspension means (14) extending downwardly from the first pivot axis (55) and being pivotal through an arc (φ,θ) in a rearward direction for constraining the main ground engaging wheels (12) to move through the respective working positions, as the main ground engaging wheels (12) are urged rearwardly from the transport position to the respective working positions.

4. A tedder apparatus as claimed in Claim 3 **characterised in that** the suspension means (14) is pivotal rearwardly from a transport position thereof corresponding to the transport position of the main ground engaging wheels (12) to and through respective working positions corresponding to the respective working positions of the main ground engaging wheels.

5. A tedder apparatus as claimed in Claim 4 **characterised in that** the suspension means (14) is pivotal rearwardly and downwardly through an arc (θ) from the transport position thereof to a bottom dead centre position below the first pivot axis (55) prior to being pivoted rearwardly upwardly to the selectable working positions thereof.

6. A tedder apparatus as claimed in Claim 5 **characterised in that** the suspension means (14) is pivotal forwardly from the bottom dead centre position to the transport position through an angle (θ) of at least 5°.

7. A tedder apparatus as claimed in Claim 5 or 6 **characterised in that** the suspension means (14) is pivotal forwardly from the bottom dead centre position to the transport position through an angle (θ) in the range of 5° to 80°.

8. A tedder apparatus as claimed in any of Claims 5 to 7 **characterised in that** the suspension means (14) is pivotal forwardly from the bottom dead centre position to the transport position through an angle (θ) in the range of 20° to 60°.

9. A tedder apparatus as claimed in any of Claims 5 to 8 **characterised in that** the suspension means (14) is pivotal forwardly from the bottom dead centre position to the transport position through an angle (θ) of approximately 40°.

10. A tedder apparatus as claimed in any preceding claim **characterised in that** a limit means (58) is provided for selectively limiting rearward travel of the main ground engaging wheels (12) to the respective selectable working positions.

11. A tedder apparatus as claimed in Claim 10 **characterised in that** the limit means (58) is urgeable through a plurality of selectable limit positions corresponding to the selectable working positions of the main ground engaging wheels (12), and a retaining means (70,67,69,64) is provided for selectively retaining the limit means (58) in the respective selectable limit positions.

12. A tedder apparatus as claimed in Claim 11 **characterised in that** the limit means (58) is pivotally mounted on the chassis (3), and is pivotal through the respective limit position.

13. A tedder apparatus as claimed in any preceding claim **characterised in that** at least one stop member (53) mounted on the chassis (3) is engageable with at least one engagement member (54) carried on the suspension means (14) in the forward transport position thereof.

14. A tedder apparatus as claimed in any preceding claim **characterised in that** an urging means (74) is provided for urging the main ground engaging wheels (12) from the transport position to the respective selectable working positions.

15. A tedder apparatus as claimed in Claim 14 **characterised in that** the urging means comprises a hydraulic ram (74) operably connected between the chassis (3) and the suspension means (14).
